(19) Europäisches Patentamt / European Patent Office / Office européen des brevets

(11) **EP 4 081 375 B1**

(12) **EUROPEAN PATENT SPECIFICATION**

(45) Date of publication and mention of the grant of the patent:
**13.11.2024 Bulletin 2024/46**

(21) Application number: **20845388.6**

(22) Date of filing: **18.12.2020**

(51) International Patent Classification (IPC):
**B25J 9/16** $^{(2006.01)}$

(52) Cooperative Patent Classification (CPC):
**B25J 9/1638;** G05B 2219/37434;
G05B 2219/39195; G05B 2219/41166;
G05B 2219/41231; G05B 2219/50041

(86) International application number:
**PCT/DK2020/050385**

(87) International publication number:
**WO 2021/136566 (08.07.2021 Gazette 2021/27)**

(54) **METHOD OF SUPPRESSING VIBRATIONS OF A ROBOT ARM WITH EXTERNAL OBJECTS**

VERFAHREN ZUR UNTERDRÜCKUNG VON SCHWINGUNGEN EINES ROBOTERARMS MIT EXTERNEN OBJEKTEN

PROCÉDÉ DE SUPPRESSION DE VIBRATIONS D'UN BRAS DE ROBOT AVEC DES OBJETS EXTERNES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.12.2019 DK PA201901559**

(43) Date of publication of application:
**02.11.2022 Bulletin 2022/44**

(73) Proprietor: **Universal Robots A/S**
**5260 Odense S (DK)**

(72) Inventors:
- **SØE-KNUDSEN, Rune**
  **5792 Årslev (DK)**
- **THOMSEN, Dan Kielsholm**
  **Hinnerup 8382 (DK)**

(74) Representative: **Fish & Richardson P.C.**
**Highlight Business Towers**
**Mies-van-der-Rohe-Straße 8**
**80807 München (DE)**

(56) References cited:
**EP-A2- 1 920 892    WO-A1-2019/012040**

**Description**

**FIELD OF THE INVENTION**

The present invention relates to methods and robot controllers for controlling a robot arm comprising a plurality of robot joints connecting a robot base and a robot tool flange, where external objects have been provided to the robot arm.

**BACKGROUND OF THE INVENTION**

Robot arms comprising a plurality of robot joints and links where motors or actuators can move parts of the robot arm in relation to each other are known in the field of robotics. Typically, the robot arm comprises a robot base which serves as a mounting base for the robot arm; and a robot tool flange where to various tools can be attached. A robot controller is configured to control the robot joints in order to move the robot tool flange in relation to the base. For instance, in order to instruct the robot arm to carry out a number of working instructions. The robot joints may be rotational robot joints configured to rotate parts of the robot arm in relation to each other, prismatic joints configured to translate parts of the robot arm in relation to each other and/or any other kind of robot joints configured to move parts of the robot arm in relation to each other.

Typically, the robot controller is configured to control the robot joints based on a dynamic model of the robot arm, where the dynamic model defines a relationship between the forces acting on the robot arm and the resulting accelerations of the robot arm. Often, the dynamic model comprises a kinematic model of the robot arm, knowledge about inertia of the robot arm and other parameters influencing the movements of the robot arm. The kinematic model defines a relationship between the different parts of the robot arm and may comprise information of the robot arm such as, length, size of the joints and links and can for instance be described by Denavit-Hartenberg parameters or like. The dynamic model makes it possible for the controller to determine which torques and/or forces the joint motors or actuators shall provide in order to move the robot joints for instance at specified velocity, acceleration or in order to hold the robot arm in a static posture.

Robot arms need to be programmed by a user or a robot integrator which defines various instructions for the robot arm, such as predefined moving patterns and working instructions such as gripping, waiting, releasing, screwing instructions. The instruction can be based on various sensors or input signals which typically provide a triggering signal used to stop or start at a given instruction. The triggering signals can be provided by various indicators, such as safety curtains, vision systems, position indicators, etc.

Typically, it is possible to attach various end effectors to the robot tool flange or other parts of the robot arm, such as grippers, vacuum grippers, magnetic grippers, screwing machines, welding equipment, dispensing systems, visual systems etc.

A collaborative robot is a robot designed for direct interaction with a human. Light-weight design is one of the main concerns, when a robot is designed to be collaborative. This is to reduce the impact in a potential collision with a human or an obstacle. Thus, the design will be a compromise between low mass and high rigidity. Light-weight design is a major goal in current development of robots, cranes, and automotive industry, just to name a few. A light-weight design is motivated by for example increased performance, increased safety, reduced environmental footprint, reduced energy consumption, and reduced price. A light-weight design will feature an increased amount of mechanical flexibility, compared to the traditional heavy and rigid industrial robots, which are often based on a cast iron design.

Robots with mechanical flexibility pose a challenge in terms of performance. For example, when rapid point-to-point motions are desired, and mechanical vibrations are not acceptable. Therefore, it is desired to suppress mechanical vibrations in robot arms. This can for instance be achieved by utilizing input shaping methods, which slightly modify the target motion of the robot arm, by intelligently adding a time-delay. The modified(shaped) trajectory will reduce the amount of vibrations at the critical natural frequencies of the system.

WO2019012040A1 and corresponding scientific articles {ii.} {iii.} discloses a method for generating inputs to a physical system with varying dynamic properties, which can be used to suppress the mechanical vibrations of a robot arm. The control signals to the robot arm are generated based on the dynamic properties of the physical system which for instance can be obtained based on dynamic modeling of the physical system, lookup tables containing dynamic properties of the physical system, measurements of parts of the physical system, or a combination of the aforementioned. In order to provide an efficient vibration suppression of the robot arm accurate dynamic properties of the robot arm at various poses must be available for the possible poses of the robot arm, where a pose of the robot arm characterizes the position and orientation of the different parts of the robot arm, for instance in form of the positions of the robot joints such as joint angles of the robot joints. This can be achieved by arranging the robot arm in the possible poses and obtain the dynamic properties of the robot arm in a given pose, for instance by performing measurements of the robot arm's damping and eigenfrequencies at the current pose. This is a very complicated process which requires measurement of eigenfrequencies and damping of robot arm at huge number of different configurations of the robot arm, as a typical robot arm can be arrange in nearly infinite amount of pose due to the fine resolution of the robot joints; this is very time consuming. Additionally, the huge number of measured data makes it difficult to evaluate the dynamic properties in real-time.

Additionally, the robot arms are often used in connection with various external objects connected to the robot arm as end effectors attached to the robot tool flange, wires, hoses, safety equipment attached to the robot arm etc. When providing such external objects, the vibrational properties of the robot arm are influenced by the external objects. Consequently, the effect of controlling the robot arm using input shaping as described in WO2019012040A1, the scientific articles {ii.} {iii.} may be limited as the vibrational properties used for input shaping typically is obtained at a calibration process during the manufacturing of the robot arm. Additionally, the robot arm may be arranged on structures that influences the vibrational properties of the robot arm whereby the similar effects occurs.

EP 1132790 A1 discloses a controller for a machine such as a robot and a machine tool having an electric motor as a driving source of the machine, capable of suppressing a natural vibration of the machine and/or an attachment attached to the machine. A frequency or a cycle of the natural vibration of an end effector of the robot as the attachment or the machine itself is determined and a coefficient of a filter for suppressing an amplitude of the natural vibration is altered in accordance with the measured frequency or cycle of the natural vibration. In the case of suppressing a natural vibration of the end effector attached to the robot, frequencies or cycles of natural vibrations of various end effectors in accordance with an operation status of the end effector are determined and stored, and the coefficient of the filter is set in accordance with the stored frequency or cycle of the natural vibration in accordance with the end effector attached to the robot and the operation status. In the case of suppressing a natural vibration of the machine, the natural frequency of the machine is always detected and the coefficient of the filter is automatically altered in accordance with the detected natural frequency, to thereby suppressing an amplitude of the natural vibration of the machine having the natural frequency varying due to variation of load and aging of the machine.

References

{i.} P.H. Chang, H.-S. Park, Time-varying input shaping technique applied to vibration reduction of an industrial robot, Control Engineering Practice 13 (1) (2005) 121-130 http://dx.doi.org/10.1016/j.conengprac.2004.02.009

{ii.} D. K. Thomsen, R. Søe-Knudsen, D. Brandt, X. Zhang, Experimental implementation of time-varying input shaping on ur robots, in: Proceedings of the 16th International Conference on Informatics in Control, Automation and Robotics (ICINCO 2019), Vol.~1, 2019, pp. 488-498; http://dx.doi.org/10.5220/0007834504880498

{iii.} D. K. Thomsen, R. Søe-Knudsen, D. Brandt, O. Balling, X. Zhang, Smooth online time-varying input shaping with fractional delay {FIR} filtering, Control Engineering Practice 88 (2019) 21-37; http://dx.doi.org/10.1016/j.conengprac.2019.04.003

EP 1920892 A2 describes a control device that has a dynamic model for a robot to be controlled using the control device. The robot is connected with a component, and dynamic characteristics of the robot and dynamic characteristics of the component are considered for the dynamic model. The component is a fastening device for fastening the robot, a device for handling objects, a gripper with a gripped workpiece and a workpiece gripped with the robot. The dynamic model is a spring-damper model consisting of a set of modeled spring-damper units.

**SUMMARY OF THE INVENTION**

The object of the present invention is to address the above described limitations with the prior art or other problems of the prior art. This is achieved by the robot controller and a method of controlling a robot arm according to the independent claims.

Where, the robot controller according to an independent claim comprises an external object installation interface configured to receive vibrational properties of at least one external object connected to the robot arm and where the robot controller is configured to generate a control signal for the robot arm based on a target motion and the received vibrational properties of the at least one external object. This makes it possible for the user to ensure that the robot controller controls the robot arm in a way that minimizes the vibrations of and/or caused by external objects connected to the robot arm. The external object installation interface makes it possible, for a user to provide the vibrational properties as these typically are not known by the robot arm manufacture and the robot controller will then automatically take these vibrational properties into account when controlling the robot arm.

Where, the method for controlling a robot arm according to an independent claim comprises a step of receiving the vibrational properties of an external object connected to the robot arm via an external object installation interface, a step of generating a target motion for the robot arm and a step of generating a control signal for the robot arm based on the target motion and the received vibrational properties. This makes it possible for a user of a robot arm to provide the vibrational properties of an external object connected to the robot arm and provide control signals for the robot arm that reduces the vibrations introduced by the external object.

The dependent claims describe possible embodiments of the robot arm and methods according to the present invention. The advantages and benefits of the present invention are described in further detail the in detailed description of the invention.

**BRIEF DESCRIPTION OF THE DRAWINGS**

Fig. 1 illustrates a robot arm according to the present invention;
fig. 2 illustrates a simplified structural diagram of the robot arm;
fig. 3a-3d illustrates an interface according to various embodiments of an external object installation module according to the present invention;
fig. 4 illustrates a flow diagram of a method of controlling a robot arm according to the present invention;
fig. 5 illustrates a flow diagram of an embodiment of a method of controlling a robot arm according to the present invention;
fig. 6 illustrates a flow diagram of an embodiment of a method of controlling a robot arm according to the present invention;
fig. 7 illustrates a flow diagram of an embodiment of a method of controlling a robot arm according to the present invention; and
fig. 8a-8d illustrates an interface comprising a program tree module comprising program steps executing the method of controlling the robot arm according to the present invention.

**DETAILED DESCRIPTION OF THE INVENTION**

The skilled person will be able to provide several embodiments within the scope of the claims. Throughout the description, the reference numbers of similar elements providing similar effects have the same last two digits. Further it is to be understood that in the case that an embodiment comprises a plurality of the same features then only some of the features may be labeled by a reference number.

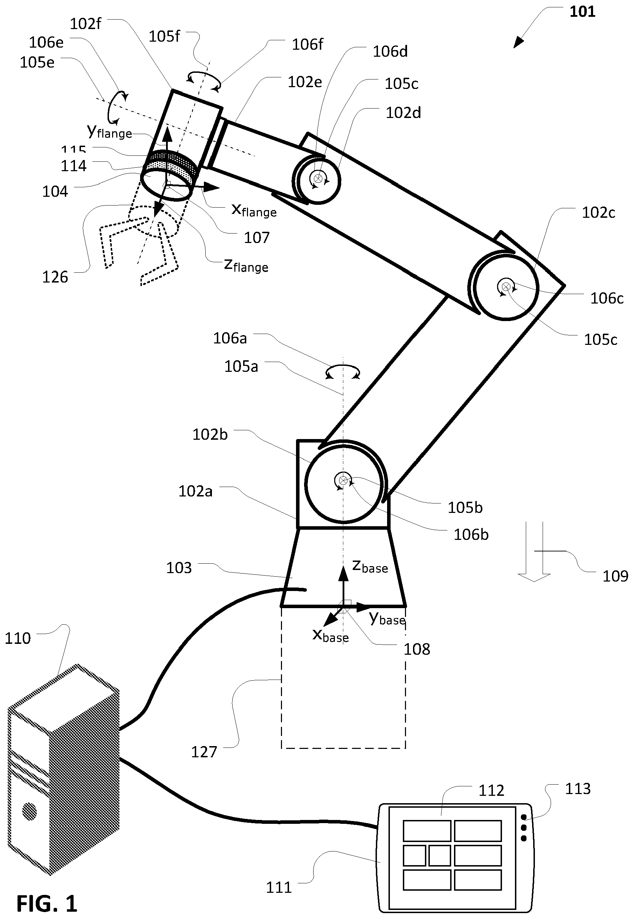

Fig. 1 illustrates a robot arm 101 comprising a plurality of robot joints 102a, 102b, 102c, 102d, 102e, 102f connecting a robot base 103 and a robot tool flange 104. A base joint 102a is configured to rotate the robot arm around a base axis 105a (illustrated by a dashed dotted line) as illustrated by rotation arrow 106a; a shoulder joint 102b is configured to rotate the robot arm around a shoulder axis 105b (illustrated as a cross indicating the axis) as illustrated by rotation arrow 106b; an elbow joint 102c is configured to rotate the robot arm around an elbow axis 105c (illustrated as a cross indicating the axis) as illustrated by rotation arrow 106c; a first wrist joint 102d is configured to rotate the robot arm around a first wrist axis 105d (illustrated as a cross indicating the axis) as illustrated by rotation arrow 106d and a second wrist joint 102e is configured to rotate the robot arm around a second wrist axis 105e (illustrated by a dashed dotted line) as illustrated by rotation arrow 106e. Robot joint 102f is a robot tool joint comprising the robot tool flange 104, which is rotatable around a tool axis 105f (illustrated by a dashed dotted line) as illustrated by rotation arrow 106f. The illustrated robot arm is thus a six-axis robot arm with six degrees of freedom with six rotational robot joints, however it is noticed that the present invention can be provided in robot arms comprising less or more robot joints and also other types of robot joints such as prismatic robot joints providing a translation of parts of the robot arm for instance a linear translation.

A robot tool flange reference point 107 also known as a TCP (Tool Center Point) is indicated at the robot tool flange and defines the origin of a tool flange coordinate system defining three coordinate axes $x_{flange}$, $y_{flange}$, $z_{flange}$. In the illustrated embodiment the origin of the robot tool flange coordinate system has been arranged on the tool flange axis 105f with one axis ($z_{flange}$) parallel with the tool flange axis and with the other axes $x_{flange}$, $y_{flange}$ parallel with the outer surface of the robot tool flange 104. Further a base reference point 108 is coincident with the origin of a robot base coordinate system defining three coordinate axes $x_{base}$, $y_{base}$, $z_{base}$. In the illustrated embodiment the origin of the robot base coordinate system has been arrange on the base axis 105a with one axis ($z_{base}$) parallel with the base axis 105a axis and with the other axes $x_{base}$, $y_{base}$ parallel with the bottom surface of the robot base. The direction of gravity 109 in relation to the robot arm is also indicated by an arrow and it is to be understood that the robot arm can be arranged at any position and orientation in relation to gravity.

The robot arm comprises at least one robot controller 110 configured to control the robot arm 101 and can be provided as a computer comprising in interface device 111 enabling a user to control and program the robot arm. The controller can be provided as an external device as illustrated in fig. 1 or as a device integrated into the robot arm or as a combination thereof. The interface device can for instance be provided as a teach pendant as known from the field of industrial robots which can communicate with the controller via wired or wireless communication protocols. The interface device can for instanced comprise a display 112 and a number of input devices 113 such as buttons, sliders, touchpads, joysticks, track balls, gesture recognition devices, keyboards, microphones etc. The display may be provided as a touch screen acting both as display and input device. The interface device can also be provided as an external device configured to communicate with the robot controller, for instance in form of smart phones, tablets, PCs, laptops etc. The interface device can be a teach pendant, a handle or a smartphone communicating wired or wireless with the robot controller.

The robot tool flange 104 comprises a force-torque sensor 114 integrated into the robot tool flange 104 The force-torque sensor 114 provides a tool flange force signal indicating a force-torque provided at the robot tool flange. In the illustrated embodiment the force-torque sensor is integrated into the robot tool flange and is configured to indicate the forces and torques applied to the robot tool flange in relation to the tool robot tool flange reference point 107. The force -torque sensor 114 provides a force and torque signal indicating a force and torque provided at the tool flange. In the illustrated embodiment the force-torque sensor is integrated into the robot tool flange and is configured to indicate the forces applied to the robot tool flange in relation to the reference point 107 and in the tool flange coordinate system. However, the force-torque sensor can indicate the force-torque applied to the robot tool flange in relation to any point which can be linked to the robot tool flange coordinate system. In one embodiment the force-torque sensor is provided as a six-axis force-torque sensor configured to indicate the forces along and the torques around three perpendicular axes. The force-torque sensor can for instance be provided as any force-torque sensor capable of indicating the forces and torques in relation to a reference point for instance any of the force torque sensors disclosed by WO2014/110682A1, US4763531, US2015204742. However, it is to be understood that the force sensor in relation to the present invention not necessarily need to be capable of sensing the torque applied to the tool flange. It is noted that the force-torque sensor may be provided as an external device arranged at the robot tool flange, at other parts of the robot arm or be omitted.

An acceleration sensor 115 is arranged at the robot tool joint 102f and is configured to sense the acceleration of the robot tool joint 102f and/or the acceleration of the robot tool flange 104. The acceleration sensor 115 provides an acceleration signal indicating the acceleration of the robot tool joint 102f and/or the acceleration of the robot tool flange 104. In the illustrated embodiment the acceleration sensor is integrated into the robot tool joint and is configured to indicate accelerations of the robot tool joint in the robot tool coordinate system. However, the acceleration sensor can indicate the acceleration of the robot tool joint in relation to any point which can be linked to the robot tool flange coordinate system. The acceleration sensor can be provided as any accelerometer capable of indicating the accelerations of an object. The acceleration sensor can for instance be provided as an IMU (Inertial Measurement Unit) capable of indicating both linear acceleration and rotational accelerations of an object. It is noted that the acceleration sensor may be provided as an external device arranged at the robot tool flange, at other parts of the robot arm or omitted.

Each of the robot joints comprises a robot joint body and an output flange rotatable or translatable in relation to the robot joint body and the output flange is connected to a neighbor robot joint either directly or via an arm section as known in the art. The robot joint comprises a joint motor configured to rotate or translate the output flange in relation to the robot joint body, for instance via a gearing or directly connected to the motor shaft. The robot joint body can for instance be formed as a joint housing and the joint motor can be arranged inside the joint housing and the output flange can extend out of the joint housing. Additionally, the robot joint comprises at least one joint sensor providing a sensor signal indicative of at least one of the following parameters: an angular and/or linear position of the output flange, an angular and/or linear position of the motor shaft of the joint motor, a motor current of the joint motor or an external force and/or torque trying to rotate the output flange or motor shaft. For instance, the angular position of the output flange can be indicated by an output encoder such as optical encoders, magnetic encoders which can indicate the angular position of the output flange in relation to the robot joint. Similarly, the angular position of the joint motor shaft can be provided by an input encoder such as optical encoders, magnetic encoders which can indicate the angular position of the motor shaft in relation to the robot joint. It is noted that both output encoders indicating the angular position of the output flange and input encoders indicating the angular position of the motor shaft can be provided, which in embodiments where a gearing have been provided makes it possible to determine a relationship between the input and output side of the gearing. The joint sensor can also be provided as a current sensor indicating the current through the joint motor and thus be used to obtain the torque provided by the motor. For instance, in connection with a multiphase motor, a plurality of current sensors can be provided in order to obtain the current through each of the phases of the multiphase motor. It is also noted that some of the robot joints may comprise a plurality of output flanges rotatable and/or translatable by joint actuators, for instance one of the robot joints may comprise a first output flange rotating/translating a first part of the robot arm in relation to the robot joint and a second output flange rotating/translating a second part of the robot arm in relation to the robot joint. As indicated above, the joint sensor can also be provided as a force-torque sensor or an acceleration sensor. Such force and/or torque and acceleration sensor may be part of the outmost joint as indicated on fig. 1, however the other parts of the robot arm may also comprise force-torque sensors or acceleration sensors. The robot controller is configured to control the motions of the parts of the robot arm and the robot joints by controlling the motor torque provided to the joint motors based on a dynamic model of the robot arm, the direction of gravity acting and the joint sensor signal.

An end effector 126 (illustrated in dotted lines) is attached to the robot tool flange and is illustrated in form of a gripper, however it is to be understood that the end effector can be any kind of end effector such as grippers, vacuum grippers, magnetic grippers, screwing machines, welding equipment, gluing equipment, dispensing systems, painting equipment, visual systems, cameras etc. The end effector 126 constitute an external object connected to the robot arm, however an external object connected to the robot arm can be any objects or objects connected to the robot arm such as wires, hoses, safety equipment, markers, lights etc. which is connected to the robot arm. The robot base 103 is also connected to an external object which is illustrated in form of a robot stand 127 (illustrated in dashed lines), whereon the robot arm is mounted.

External objects connected to the robot arm have some vibrational properties that influences the robot arm and the external objects may vibrate due to movement of the robot arm. For instance, the working point of end effectors may vibrate during movement of the robot arm in an undesired way. For instance, in situations were the external object is provided as a camera for visual inspection the camera may vibrate upon arrival at the position where the camera needs to take photos or video, consequently the camera need to wait some time before it can take the photos/video. Consequently, the inspection time is prolonged. End effectors where the working point of the end effector need to be very precise and accurate also need to wait until the vibrations are reduced. As will be described in the following paragraphs the robot controller according to the present invention solves this by providing an external object installation interface, where vibrational properties of at least one external object connected to the robot arm can be provided to the robot controller. The robot controller can then be configured to generate controls signal for the joint motors based on a target motion and the vibrational properties of the external object. This makes it possible for the user to ensure that the robot controller controls the robot arm in a way that minimizes the vibrations of and/or caused by external objects connected to the robot arm. The external object installation interface makes if possible, for a user to provide the vibrational properties as these typically are not known by the robot arm manufacture and the robot controller will then automatically take these vibrational properties into account when controlling the robot arm.

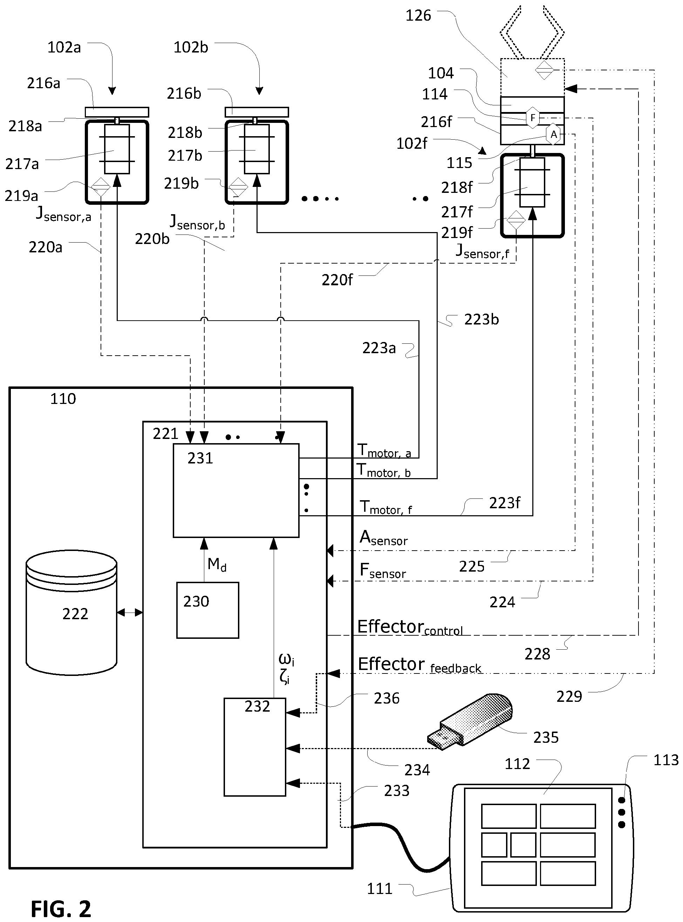

Fig. 2 illustrates a simplified structural diagram of the robot arm illustrated in fig. 1. The robot joints 102a, 102b and 102f have been illustrated in structural form and the robot joints 102c, 102d, 102e and the robot links connecting the robot joints have been omitted for the sake of simplicity of the drawing. Further the robot joints are illustrated as separate elements however it is to be understood that they are interconnected either directly or via a robot link as illustrated in fig. 1. The robot joints comprise an output flange 216a, 216b, 216f and a joint motor 217a, 217b, 217f or another kind of actuator, where the output flange 216a, 216b, 216f is rotatable in relation to the robot joint body. The joint motors 217a, 217b, 217f are respectively configured to rotate the output flanges 216a, 216b, 216f via an output axle 218a, 218b, 218f. It is to be understood that the joint motor or joint actuator may be configured to rotate the output flange via a transmission system such as a gear (not shown). In this embodiment the output flange 216f of the tool joint 123f constitutes the tool flange 104. The robot joints may optionally comprise at least one joint sensor 219a, 219b, 219f providing a sensor signal 220a, 220b, 220f indicative of at least one joint sensor parameter $J_{sensor,a}$, $J_{sensor,b}$, $J_{sensor,f}$ of the respective joint. The joint sensor parameter can for instance indicate a pose parameter indicating the position and orientation of the output flange in relation to the robot joint body, an angular position of the output flange, an angular position of a shaft of the joint motor, a motor current of the joint motor. The joint sensor parameter is selected from the list comprising: speed, acceleration, torque, motor torque, force and position. The joint sensor parameters can be measures obtained from sensors or values derived from such sensor values. For instance, the angular position of the output flange can be indicated by an output encoder such as optical encoders, magnetic encoders which can indicate the angular position of the output flange in relation to the robot joint. Similarly, the angular position of the joint motor shaft can be provided by an input encoder such as optical encoders, magnetic encoders which can indicate the angular position of the motor shaft in relation to the robot joint. The motor currents can be obtained and indicated by current sensors.

Robot tool joint 102f comprises the force-torque sensor 114 providing a tool flange force-torque signal 224 indicating a force-torque $FT_{flange}$ provided to the tool flange. For instance, the force signal-torque $FT_{flange}$ can be indicated as a force vector $\overrightarrow{F_{sensor}^{flange}}$ and a torque vector $\overrightarrow{T_{sensor}^{flange}}$ in the robot tool flange coordinate system:

$$\text{eq. 1} \qquad \overrightarrow{F_{sensor}^{flange}} = \begin{pmatrix} F_{x,sensor}^{flange} \\ F_{y,sensor}^{flange} \\ F_{z,sensor}^{flange} \end{pmatrix}$$

where $F_{x,sensor}^{flange}$ is the indicated force along the $x_{flange}$ axis, $F_{y,sensor}^{flange}$ is the indicated force along the $y_{flange}$ axis and $F_{z,sensor}^{flange}$ is the indicated force along the $z_{flange}$ axis.

In an embodiment where the force sensor is provided as a combined force-torque sensor the force-torque sensor can additionally also provide a torque signal indicating the torque provided to the tool flange, for instance as a separate signal (not illustrated) or as a part of the force signal. The torque can be indicated as a torque vector in the robot tool flange coordinate system:

$$\text{eq. 2} \qquad \overrightarrow{T_{sensor}^{flange}} = \begin{pmatrix} T_{x,sensor}^{flange} \\ T_{y,sensor}^{flange} \\ T_{z,sensor}^{flange} \end{pmatrix}$$

where $T_{x,sensor}^{flange}$ is the indicated torque around the $x_{flange}$ axis, $T_{y,sensor}^{flange}$ is the indicated torque around the $y_{flange}$ axis and $T_{z,sensor}^{flange}$ is the indicated torque around the $z_{flange}$ axis. It is noted that the force vector and torque vector can be provided as separate signals and that a separate force sensor and/or torque sensor can be provided.

Robot tool joint 102f may comprise the acceleration sensor 115 providing an acceleration signal 225 indicating the acceleration of the robot tool flange where the acceleration may be indicated in relation to the tool flange coordinate system

$$\text{eq. 3} \qquad \overrightarrow{\psi_{sensor}^{flange}} = \begin{pmatrix} \psi_{x,sensor}^{flange} \\ \psi_{y,sensor}^{flange} \\ \psi_{z,sensor}^{flange} \end{pmatrix}$$

where $\psi_{x,sensor}^{flange}$ is the sensed acceleration along the $x_{flange}$ axis, $\psi_{y,sensor}^{flange}$ is the sensed acceleration along the $y_{flange}$ axis and $\psi_{z,sensor}^{flange}$ is the sensed acceleration along the $z_{flange}$ axis. Also or alternatively, the acceleration sensor can be configured to measure the acceleration of the robot tool flange in relation to gravity and the acceleration measured acceleration in relation to gravity can be converted into accelerations in relation to the robot tool flange of robot base.

In an embodiment where the acceleration sensor is provided as a combined accelerometer/gyrometer (e.g. an IMU) the acceleration sensor can additionally or alternatively provide an angular acceleration signal indicating the angular acceleration of the output flange in relation to the robot tool flange coordinate system, for instance as a separate signal (not illustrated) or as a part of the acceleration signal. The angular acceleration signal can indicate an angular acceleration vector $\overrightarrow{\alpha_{sensor}^{flange}}$ in the robot tool flange coordinate system

$$\text{eq. 4} \qquad \overrightarrow{\alpha_{sensor}^{flange}} = \begin{pmatrix} \alpha_{x,sensor}^{flange} \\ \alpha_{y,sensor}^{flange} \\ \alpha_{z,sensor}^{flange} \end{pmatrix}$$

where $\alpha_{x,sensor}^{flange}$ is the angular acceleration around the $x_{flange}$ axis, $\alpha_{y,sensor}^{flange}$ is the angular acceleration around the $y_{flange}$ axis and $\alpha_{z,sensor}^{flange}$ is the angular acceleration around the $z_{flange}$ axis. Also or alternatively, the acceleration sensor can be configured to measure the angular acceleration of the robot tool flange in relation to gravity and the angular acceleration measured in relation to gravity can be converted into angular accelerations in relation to the robot tool flange of robot base.

The force sensor and acceleration sensor of the illustrated embodiment are arranged at the robot tool joint 102f; however, it is to be understood that the force sensor and acceleration sensor can be arranged at any part of the robot arm, as one or more external object connected to the robot arm. It is noted that the force sensor and acceleration sensor are optional and that they can be omitted.

An end effector 127 in form of a gripper (illustrated in dotted lines) is connected to the robot tool flange 104. The end effector may be connected to the robot controller and the robot controller may be configured to control the end effector via an end effector control signal 228. Further the end effector may provide an effector feedback signal 229 to the robot controller for instance in order to indicate the status of the end effector, signals from various sensors etc.

The robot controller 110 comprises a processor 221, memory 222, a motion planer module 230, a motor controller module 231 and an external object installation interface 232. The motion planer module 230, the motor controller module 231 and the external object installation interface 232 can for instance be provided as processes executed by the processor 221, however it is noted that they also can be executed on separate processor units.

The motion planner module 230 is configured to provide target motions of the robot arm, for instance by generating trajectories of parts of the robot arm. The trajectories can for instance be generated based on a robot program instructing the robot arm to perform various tasks or user inputs provided via an interface device 111. In the illustrated embodiment the motion planner module provides a target motion $M_d$ of parts of the robot arm. The target motion may indicate a path along which a part of the robot arm shall move, the speed of a part of the robot arm, the acceleration of a part of the robot arms, a waypoint to which a part of the robot arm shall move. The target motion can for instance be indicated in cartesian space in reference to the robot base coordinate system, the tool flange coordinate system or any other reference coordinate systems. Also, the target motion can be indicated in joint space where the motions properties of the robot joints are indicated; e.g. as angular position $q_d$ of output axles of the joint transmissions, a desired angular velocity $\dot{q}_d$ of output axles of the joint transmissions, a desired angular acceleration $\ddot{q}_d$ of the robot transmission.

The target motion $M_d$ is provided to the motor controller module 231. The motor controller module 231 is configured to generate at least one motor control signal to the joint motors, for instance in form of a motor control signals 223a, 223b, 223f indicating control parameters for the joint motors, which can be used to control the joint motors as desired. For instance the control parameters can indicate the motor torque $T_{motor,a}$, $T_{motor,\,b}$, and $T_{motor,f}$ that each joint motor shall provide to the output flanges and the robot controller is configured to determine the motor torque based on a dynamic model of the robot arm as known in the prior art. The motor controller module 231 is configured to generate the motor control signals 223a, 223b, 223f based on the target motion $M_d$ and a dynamic model of the robot arm $D_{robot}$. The dynamic model of the robot arm $D_{robot}$ can for instance be stored in a memory 222. The dynamic model makes it possible for the controller to calculate which torque the joint motors shall provide to each of the joint motors to make the robot arm perform a target motion, where a target motion indicate a motion of at least a part of the robot arm. The motor controller module may additionally also be configured to generate the motor control signal 223a, 223b, 223f based on at least one sensor signal 220a, 220b, 220f indicative of at least one joint sensor parameter $J_{sensor,a}$, $J_{sensor,b}$, $J_{sensor,f}$ and/or other sensor signals indicating other robot parameters. The sensor signal can for instance indicate the angular position q of the output axle; the angular position $\Theta$ of the motor axle; the motor torque $\tau_{motor}$ provided to the motor axle by the joint motor. For instance, the joint motors can be provided as multiphase electromotors and the robot controller can be configured to adjust the motor torque provided by the joint motors by regulating the current through the phases of the multiphase motors as known in the art of motor regulation.

In addition, the motor controller module is configured to generate the control signal for the robot arm based on vibrational properties $(\omega_i, \zeta_i)$ of at least one external object connected to the robot arm, where the vibrational properties are received by the external object installation interface 232. This makes it possible for the user to ensure that the robot controller controls the robot arm in a way that minimizes the vibrations of and/or caused by external objects connected to the robot arm. The external object installation interface makes it possible, for a user to provide the vibrational properties as these typically are not known by the robot arm manufacture and the robot controller will then automatically take these vibrational properties into account when controlling the robot arm. The external object installation interface can be configured to receive the vibrational properties of the at least one external object via a vibrational properties user signal 233 received via an user interface device 111, a vibrational properties data signal 234 received from an external data source 235 (e.g. a memory device, a server, an external processer, etc) and/or a vibrational properties effector signal 236 received from the external object for instance as a effector feedback signal 229 .

In one embodiment the vibrational properties of the at least one external object is received from a vibrational properties user signal 233 received via an user interface device 111. This makes it possible for a user to provide the vibrational properties of external objects connected to the robot arm directly to the robot arm, for instance in connection with an installation module where the user provided various properties of external objects connected to the robot arm.

In one embodiment the vibrational properties of the at least one external object is received from a vibrational properties data signal 234 received from an external data source 235. This makes it possible to connect the robot controller to receive the vibrational properties from any data source which can be connected to the robot arm. For instance, providers of external objects which can be connected to the robot arm can provide the vibrational properties of the external object as data which automatically can be installed on the robot controller without the user having detailed knowledge of the vibrational properties. This is advantageously in that simplifies the user's tasks of providing vibrational properties of external objects and makes it thus easier for the user to reduce vibrations of the robot arm caused by connection external objects to the robot arm. Additionally, the external data source may update the vibrational properties of the external object in real time.

In one embodiment the vibrational properties of the at least one external object is received from a vibrational properties effector signal 236 received from the external object. This makes it possible to automatically receive the vibrational properties directly from the external object once an effector feedback signal is established. External objects like end effector may have comprise their own processor and memory and the end effector can be configured to send the vibrational properties to the robot controller when the two are interconnected. Providers of external objects can hereby provide the vibrational properties of the external object on the external object itself hereby it can be ensured that vibrational properties of the external object follow the external object. This is advantageously in that it simplifies the user's tasks of providing vibrational properties of the external objects and makes it thus easier for the user to reduce vibrations of the robot arm caused by connecting external objects to the robot arm. Additionally, the external object may update the vibrational properties of the external object in real time.

The vibrational properties of the external object can be received in form of at least one number indicating the vibrational properties of the at least one external object. The at least one number indicating the vibrational properties of the at least one external object can be any kind of number such as integers, rational number, real numbers and or complex numbers. Also, the vibrational properties can be received in form of at least one external object vibration formula, where the external object vibration formula defines at relationship between the vibrational properties of the at least one external object and at least one robot parameter. This makes it possible to obtain the vibrational properties of the external object based on robot parameters such as position, orientation, speed, acceleration of parts of the robot arm, as such parameters may influence the vibrational properties of the external object. The external object vibration formula may for instance be defined in form of a mathematical formula, program codes, look up tables or combinations thereof. Also, it is to be understood the robot parameters of which different formulas is defined can be the same, different of partially the same. Also, the numbers indicating the vibrational properties of the external object and/or a result of another formula can be used as input into one formula.

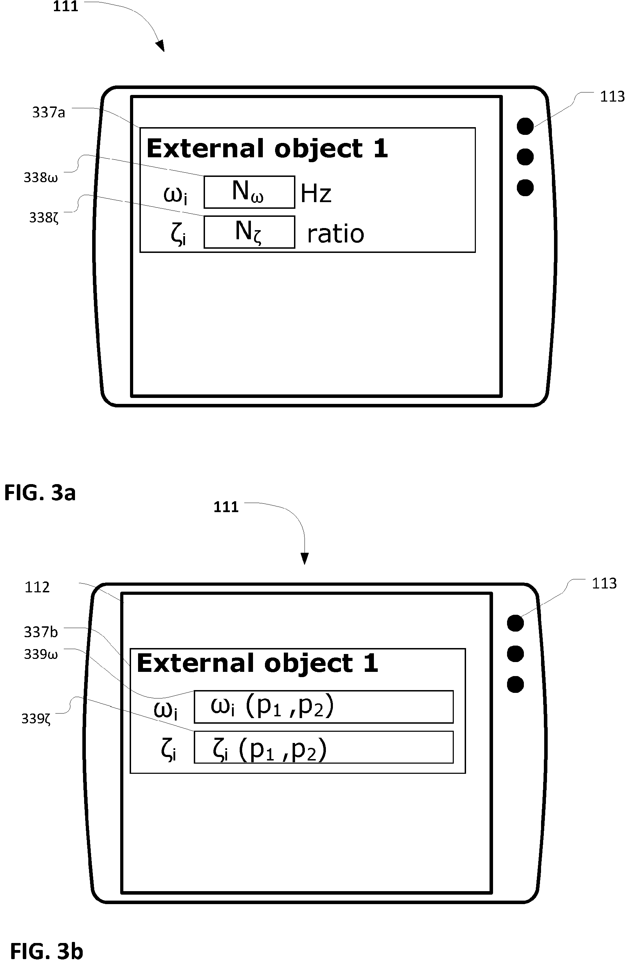

Figs. 3a-3d illustrates embodiments of a user interface 111 comprising a display 112 and various input devices 113 and the robot controller is connected to the use interface device as described in fig. 1. The user interface comprises an external object installation module enabling a user to manually provide the vibrational properties of the at least one external object.

In fig. 3a the external object installation interface 232 is configured to show on the display 112 of the user interface device 111 an external object installation screen module 337a in form of an external object installation user interface comprising at least one number user field where a user can enter the vibrational properties of the external object. In the illustrated embodiment a user can enter the eigenfrequency $\omega_i$ of the external object in number user field $338\omega$ as a real number $N_\omega$ in Hz, however it is to be understood that the eigenfrequency can be indicated in any unit suitable for indicating eigenfrequencies. Further a user can enter the damping ratio $\zeta_i$ of the external object in number user field $338\zeta$ as a real number $N_\zeta$.

In fig. 3b the external object installation interface 232 is configured to show on the display 112 of the user interface device 111 an external object installation screen module 337b in form of an external object installation user interface comprising at least one formula user field, where a user can enter the vibrational properties of the external objecting in form of a formula and/or program code. In the illustrated embodiment a user can enter the eigenfrequency $\omega_i$ of the external object in formula user field $339\omega$ as a function $\omega_i(p_1, p_2)$ of robot parameters $p_1$, pz and the damping ratio $\zeta_i$ of the external object in formula user field $339\zeta$ as a function $\zeta_i(p_1, p_2)$ of robot parameters $p_1$, P2.

In one embodiment wherein the external object installation module can comprise a first external object installation user interface, where a user can provide vibrational properties of a first external object connected to the robot arm and a second external object installation user interface, where a user can provide vibrational properties of a second external object connected to the robot arm. In fact, the external object installation module may comprise a plurality of external object installation user interfaces enabling a user to provide the vibrational properties of a plurality of external objects connected to the robot arm. This makes it possible for the user to provide the vibrational properties of the external objects independently of each other and thus makes it possible to reduce the vibrations caused by adding a plurality of external objects to the robot arm.

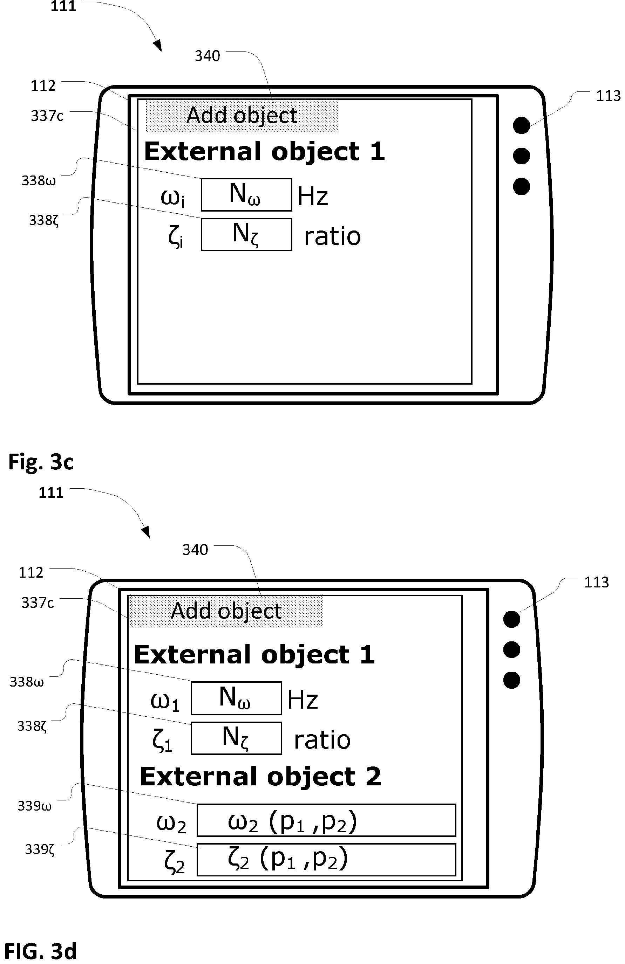

In fig. 3c the external object installation interface 232 is configured to show on the display 112 of the user interface device 111 an external object installation screen module 337c in form of an external object installation user interface comprising at least one user field where a user can enter the vibrational properties of a first external object. In the illustrated embodiment a user can enter the eigenfrequency $\omega_i$ of the external object in number user field $338\omega$ as a real number $N_\omega$ in Hz and the damping ratio $\zeta_i$ of the external object in number user field $338\zeta$ as a real number $N_\zeta$

as described in fig. 3a. It is to be understood that these user fields also can be formula user fields as described in fig. 3b. In addition, the external object installation module 337c comprises an addition interface 340 enabling a user to add an additional external object installation interface, where a user can provide vibrational properties of an additional external object connected to the robot arm. In the illustrated embodiment the addition interface is provided as a button that a user can activate, when an additional external object is to be added. Fig. 3c illustrates the user interface device in a situation where only one external object have been added. Fig. 3d illustrates the user interface device 111 of fig. 3c where two external objects have been added. Thus, a user as activated the addition button and user fields for providing the vibrational properties of the second external object have been added. In the illustrated embodiment a user can enter the eigenfrequency $\omega_i$ of the external object in formula user field 339$\omega$ as a function $\omega_i(p_1, p_2)$ of robot parameters $p_1$, pz and the damping ratio $\zeta_i$ of the external object in formula user field 339$\zeta$ as function $\zeta_i(p_1, p_2)$ of robot parameters $p_1$, $p_2$ as described in fig. 3b. It is to be understood that these user fields also can be number user fields as described in fig. 3a. This makes it easy for a user to provide the vibrational properties of external objects as the user can add as many external objects as desired.

In one embodiment the motor controller module 231 is configured to generate motor control signals to the joint motors by providing at least one object impulse train based on the received vibrational properties of the at least one external object. The object impulse train comprises a number of impulses and generate the control signal by convolving the target motion and the at least one object impulse train, for instance as described in {i.}{ii.} {iii.}. This makes it possible to reduce vibrations introduced by external objects utilizing impulse shaping techniques where the user has provided the vibrational properties of the external object. It is to be understood that generation of the object impulse train and convolving of the target motion and the object impulse train can be performed by other modules of the robot controller, for instance an impulse train generation module can be provided which is configured to generate the object impulse train based on the vibrational properties of the external object and the motion planner module 230 can be configured to perform the convolving and then send the convolved target motion to the motor controller module 231, or a convolving module can be provided which is configured to receive the target motion from the motion planner module and the impulse train from a impulse train generation module.

In an embodiment with a plurality of external objects the motor controller module can be configured to providing an impulse train based on the vibrational properties of each of the plurality of external objects. Consequently, a plurality of impulse trains is provided and the motor controller module can be configured to convolute the control signals for the joint motors with each of the impulse trains. It noted that the order of convolution does not matter, and that the plurality of impulse trains can be convolved with each other before convolving them with the control signal.

In one embodiment the motor controller module 231 is configured to generate motor control signals to the joint motors by obtaining the vibrational properties of the robot arm, for instance based on prior knowledge of the robot arm and/or based on user inputs. The motor controller module is then configured to provide a robot arm impulse train based on the vibrational properties of the robot arm and generate the control signal by convolving the target motion and the robot arm impulse train. This makes it possible to reduce vibrations caused by the robot arm. Consequently, the control signal can be convoluted by both the object impulse train and the robot arm impulse train, whereby both vibrations caused by the robot arm and the external object can be reduced.

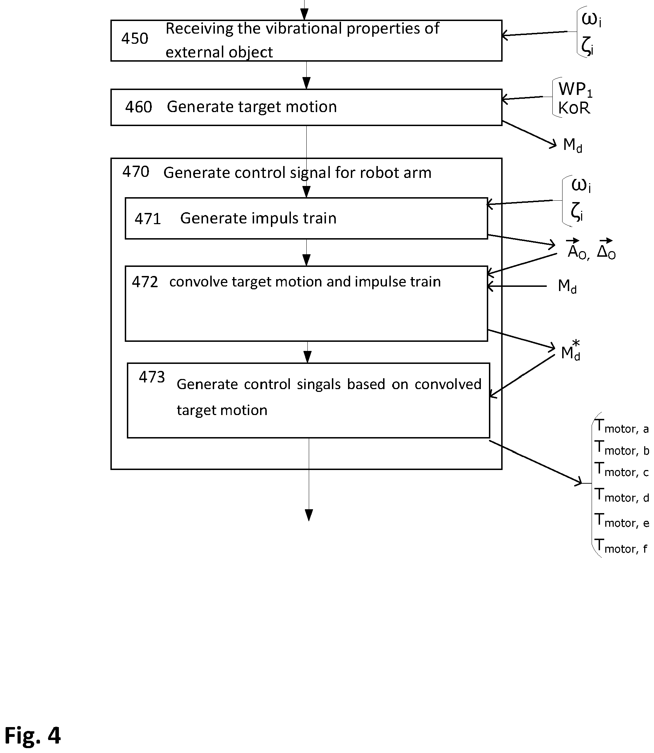

Fig. 4 illustrates a flow diagram of a method of controlling a robot arm like the robot arm illustrated and described in figs. 1-3. The method comprises a step 450 of receiving the vibrational properties of an external object connected to the robot arm via an external object installation interface, a step 460 of generating a target motion for the robot arm and step 470 of generating a control signal for the robot arm. As described previously this makes it possible for a user of a robot arm to provide the vibrational properties of an external object connected to the robot arm and control signals that reduces the vibrations introduced by the eternal object can be provided.

Step 450 of receiving the vibrational properties $(\omega_i, \zeta_i)$ of the at least one external object connected to the robot arm can be performed by one or more of the following steps:

- A step (not shown) of receiving a vibrational properties user signal from a user interface device, the vibrational properties user signal indicates the vibrational properties of at least one external object connected to the robot arm.
- A step (not shown) of receiving a vibrational properties data signal received from an external data source; the vibrational properties data signal indicates the vibrational properties of at least one external object connected to the robot arm; and/or
- A step (not shown) of receiving a vibrational properties effector signal (236) received from the external object, the vibrational properties effector signal indicates the vibrational properties of at least one external object connected to the robot arm.

Step 460 of generating a target motion for the robot arm by generating trajectories of parts of the robot arm. The trajectories can for instance be generated based on a robot program instructing the robot arm to perform various tasks or user inputs provided via an interface device. In the illustrated embodiment step 460 provides a target motion

$M_d$ of parts of the robot arm based on a desired waypoint $WP_1$ to which a part of the robot arm shall move and also based on knowledge of the robot arm KoR, such as the dynamic model and/or the kinematic model of the robot arm. The target motion may indicate a path along which a part of the robot arm shall move, the speed of a part of the robot arm, the acceleration of a part of the robot arm, a waypoint to which a part of the robot arm shall move. The target motion can for instance be indicated in cartesian space in reference to the robot base coordinate system, the tool flange coordinate system or any other reference coordinate systems. Also, the target motion can be indicated in joint space where the motions properties of the robot joints are indicated; e.g. as angular position $\boldsymbol{q}_d$ of output axles of the joint transmissions, a desired angular velocity $\dot{\boldsymbol{q}}_d$ of output axles of the joint transmissions, a desired angular acceleration $\ddot{\boldsymbol{q}}_d$ of the robot transmission.

Step 470 of generating a control signal for the robot arm is performed based on the target motion $M_D$ and the received vibrational properties, $\omega_i$, $\zeta_i$ and the control signal comprises control parameters for the joint motor. In the illustrated embodiment the control parameters are the motor torques that the joint motors shall provide $\tau_{motor}$, a, Tmotor, b, Tmotor, c, Tmotor, d, Tmotor, e, Tmotor, f.

In one embodiment step 470 of generating control signal comprises a step 471 of providing at least one object impulse train based on the provided vibrational properties of the at least one external object and a step 472 of generating the control signals based on the object impulse train and the target motion. The object impulse train comprises a number of impulses and can for instance be obtained as for instance as described in {i.}{ii.} {iii.}. The object impulse train can for instance be indicated by the magnitudes, $\overrightarrow{A_O}$, and the delays, $\overrightarrow{\Delta_O}$, of the impulses. For input shaping in general, the impulse train consist of n impulses, *n* being a positive integer. An impulse train consisting of n impulses is presented as in:

$$\text{eq. 5} \qquad \overrightarrow{A_O} = \{A_{O,1} \quad A_{O,2} \quad \cdots \quad A_{O,n}\}$$

$$\text{eq. 6} \qquad \overrightarrow{\Delta_O} = \{\Delta_{O,1} \quad \Delta_{O,2} \quad \cdots \quad \Delta_{O,n}\}$$

The step 470 of generating control signals for the robot arm comprises a step 472 of convolving the target motion $M_d$ and the object impulse train $\overrightarrow{A_O}$, $\overrightarrow{\Delta_O}$ resulting in a convolved target motion $M_d^*$ , thereafter in step 473 the control signals for the robot arm are generated based on the convolved target motion.

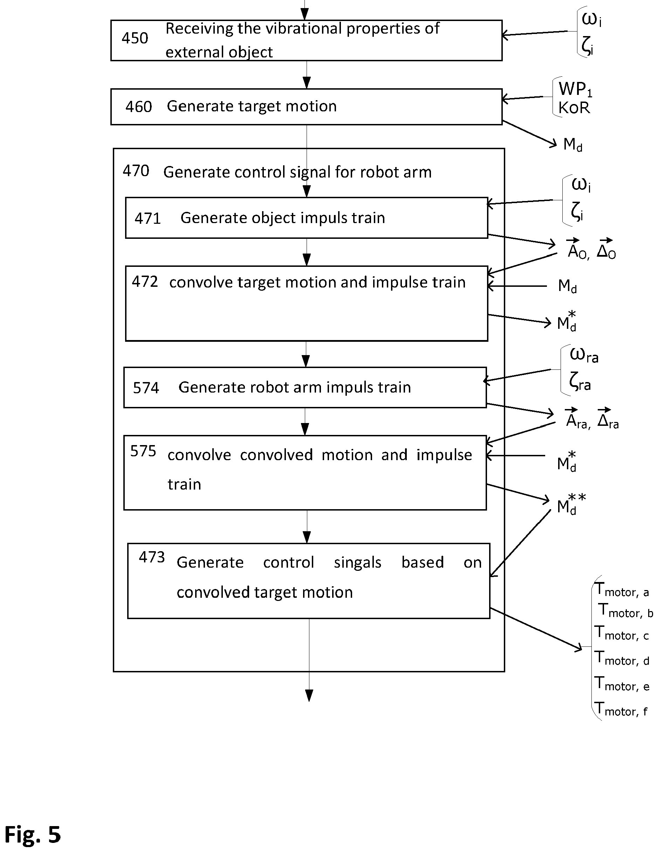

Fig. 5 illustrates a flow diagram of a method of controlling a robot arm. The method is like the method illustrated in fig. 4 and similar steps have been given the same reference numbers as in fig. 4 and will not be described further. In this embodiment the method comprises a step (not shown) of obtaining the vibrational properties $\omega_{ra}$, $\zeta_{ra}$ of the robot arm. The vibrational properties of the robot arm can for instance indicate the eigenfrequencies or damped frequencies and damping ratios of the robot arm and can for instance be obtained based on dynamic modeling of the robot arm, lookup tables containing dynamic properties of the physical system, measurements of parts of the physical system, or a combination of the aforementioned.

Further step 470 of generating control signal for the robot arm comprises a step 574 of providing a robot arm impulse train based on the vibrational properties of the robot arm, the robot arm impulse train comprises a number of impulses and can for instance be obtained as for instance as described in {i.}{ii.} {iii.}. The robot arm impulse train can for instance be indicated by the magnitudes, $\overrightarrow{A_{ra}}$, and the delays, $\overrightarrow{\Delta_{ra}}$, of the impulses:

$$\text{eq. 7} \qquad \overrightarrow{A_{ra}} = \{A_{ra,1} \quad A_{ra,2} \quad \cdots \quad A_{ra,n}\}$$

$$\text{eq. 8} \qquad \overrightarrow{\Delta_{ra}} = \{\Delta_{ra,1} \quad \Delta_{ra,2} \quad \cdots \quad \Delta_{ra,n}\}$$

In the illustrated embodiment step 470 of generating control signals for the robot arm comprises a step 575 of convolving the convolved target motion $M_d^*$ robot arm with the robot arm impulse train $\overrightarrow{A_{ra}}$, $\overrightarrow{\Delta_{ra}}$ resulting in a double convolved target motion $M_d^{**}$ , thereafter in step 473 the control signals for the robot arm are generated based on the double convolved target motion $M_d^*$ . Consequently, vibrations caused by the robot arm it self can be reduced along with the vibrations of the external object. It is noted that the order of the convolutions does not matter, and that the robot arm impulse train can be convolved with the target motion $M_d$ and where after the object impulse train can be convolved with the result of this convolution.

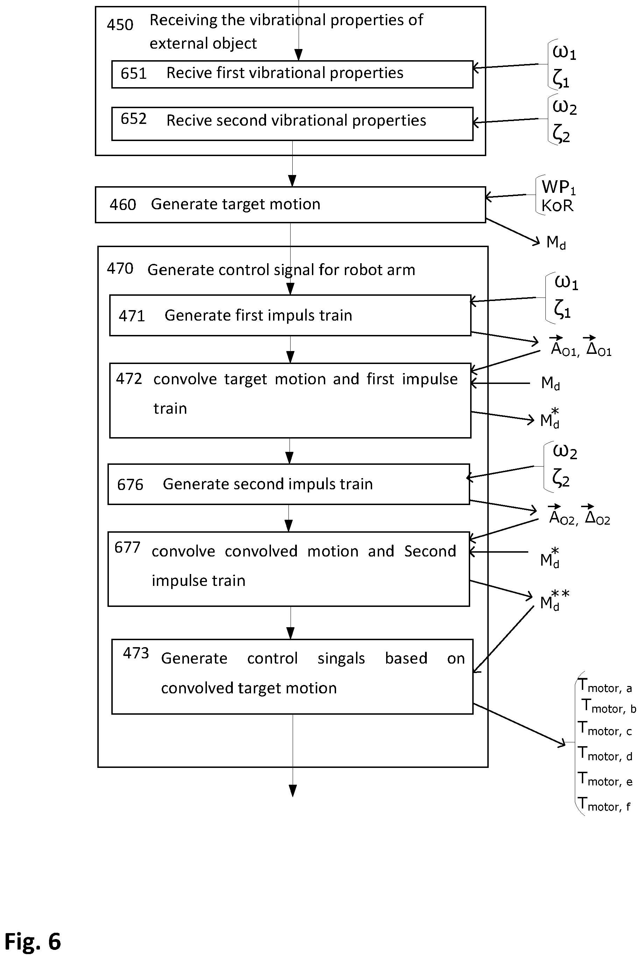

Fig. 6 illustrates a flow diagram of a method of controlling a robot arm. The method is like the method illustrated in fig. 4 and similar steps have been given the same reference numbers as in fig. 4 and will not be described further.

In this embodiment step 450 of receiving the vibrational properties of an external object connected to the robot arm comprises a step 651 of receiving the vibrational properties $\omega_1$, $\zeta_1$ of a first external object connected to the robot arm and a step 652 of receiving the vibrational properties $\omega_2$, $\zeta_2$ of a second external object connected to the robot arm.

The impulse train generated in step 471 is in this embodiment labeled $\vec{A}_{O1}$, $\vec{\Delta}_{O1}$ indicating that step 471 generates a first object impulse train based on the vibrational properties of the first external object $\omega_1$, $\zeta_1$ received in step 651. Step 472 of convolving the target motion is performed by convolving the target motion $M_d$ with the first object impulse train $\vec{A}_{O1}$, $\vec{\Delta}_{O1}$.

Further step 470 of generating control signal for the robot arm comprises a step 676 of providing a second object impulse train $\vec{A}_{O2}$, $\vec{\Delta}_{O2}$ based on the vibrational properties of the second object received in step 652.

In the illustrated embodiment step 470 of generating control signals for the robot arm comprises a step 677 of convolving the convolved target motion $M_d^*$ with the second object impulse train $\vec{A}_{O2}$, $\vec{\Delta}_{O2}$ resulting in a double convolved target motion $M_d^{**}$, thereafter in step 473 the control signals for the robot arm are generated based on the double convolved target motion $M_d^{**}$. Consequently, vibrations caused by the first external object and the second external object can be reduced. It is noted that the order of the convolutions does not matter, and that the second object impulse train can be convolved with the target motion $M_d$ and where after the first object impulse train can be convolved with result of this convolution. Also is it noted that the vibrational properties of additional external objects can be provided and the impulse trains for such additional eternal objects can be convolved with the target motion or any convolved state of the target motion. Consequently, the vibrational introduced by an unlimited number of external objects can be reduced by impulse shaping based on each of the external objects' vibrational properties. Also, the embodiment illustrated in fig. 6 can be combined with the embodiment illustrated in fig. 5 whereby the vibrations caused by a plurality of external objects and the robot arm can be reduced.

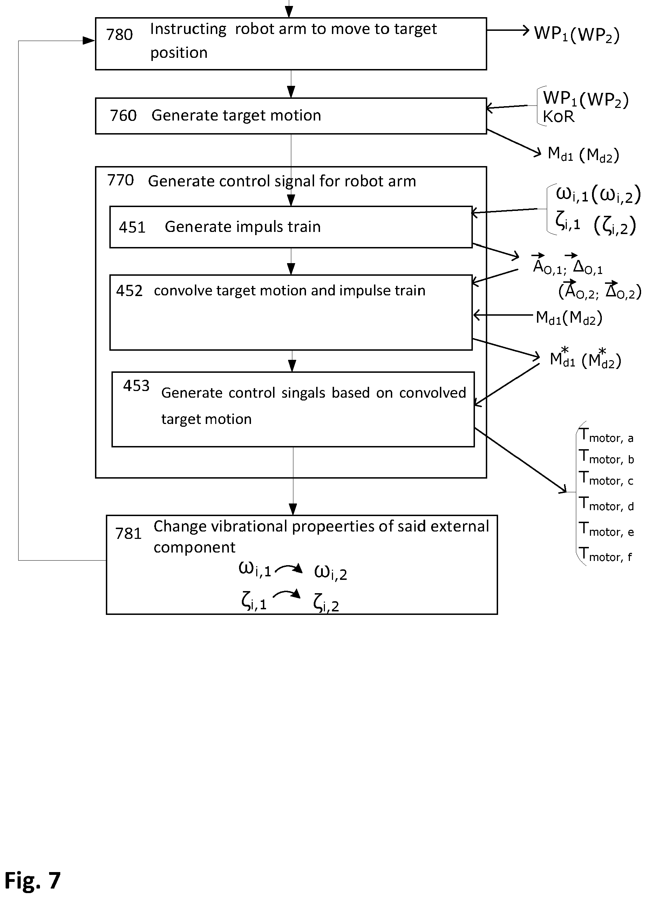

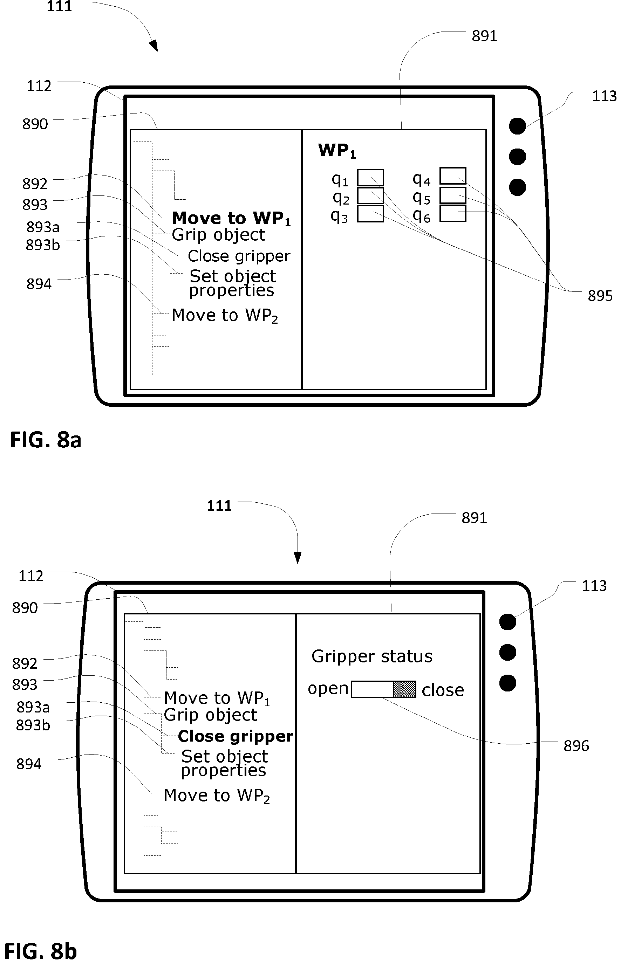

Fig. 7 illustrates a flow diagram of a method of controlling a robot arm as illustrated in figs. 1 and 2. The method can for instance be utilized via programming module of a user interface 111 comprising a display 112 and various input devices 113 as illustrated in fig. 8a-8d and which is connected to the robot controller as described in figs. 1-2. The programming module comprises a program tree module 890, which displays the program instructions provided to the robot arm by a user in form of an execution tree where the program codes are executed from the top and down when executed by robot controller. Adjacent the program tree module is a program code module 891 which shows various aspects of a selected (in bold) program code of the program tree, such as different control parameters or other information relating to the program code. The program tree comprises three parent program codes, a "Move to WPt" 892, "Grip object" 893 and a "Move to WP$_2$ " 894, where program code "Grip object" 893 comprises two sub-codes "Close Gripper" 893a, "Set object properties" 893b. In the following the method illustrated in fig. 7 will be described in view of the user interface illustrated in figs. 8a-8d.

Step 780 is a step of instructing a part of said robot arm to move to a first target position WP$_1$. This can for instance be achieved by providing a program code instructing the robot arm to move the robot tool flange to a target position in the surroundings of the robot arm. The program code can for instance be provide via a user interface as illustrated in fig. 8a as a so-called move command where the program code instructs the robot arm to move the tool flange to a target position. In fig. 8a the "Move to WPt" (illustrated in bold) have been selected and user can now in the corresponding program code module enter the joint angles $q_1$, $q_2$, $q_3$, $q_4$, $q_5$, $q_6$ of the robot joint at the target position in joint angle user fields 895. It is to be understood that the joint angle user fields only serves as an example of how the target position can be defined as the target position of a part of a robot arm can be defined based on many different parameters for instance as coordinates of the part of the robot arm in relation to the robot base are a point in the surroundings of the robot arm.

Step 760 is at step of generating a first target motion $M_{d1}$ for the robot arm, where the first target motion defines a motion of the robot arm causing the part of the robot arm to move to the first target position. Step 760 is like step 460 previous described and can for instance be performed by a motion planner module 230.

Step 770 is a step of generating first control signal(s) for the robot arm based on the first target motion and vibrational properties of at least one external object connected to said robot arm, where the control signal comprises control parameters for the joint motors. Step 770 is like step 470 described previously and generates the control signals based on input shaping based on the vibrational properties of at least one external object connected to the robot arm. For instance, the external object can be a gripper.

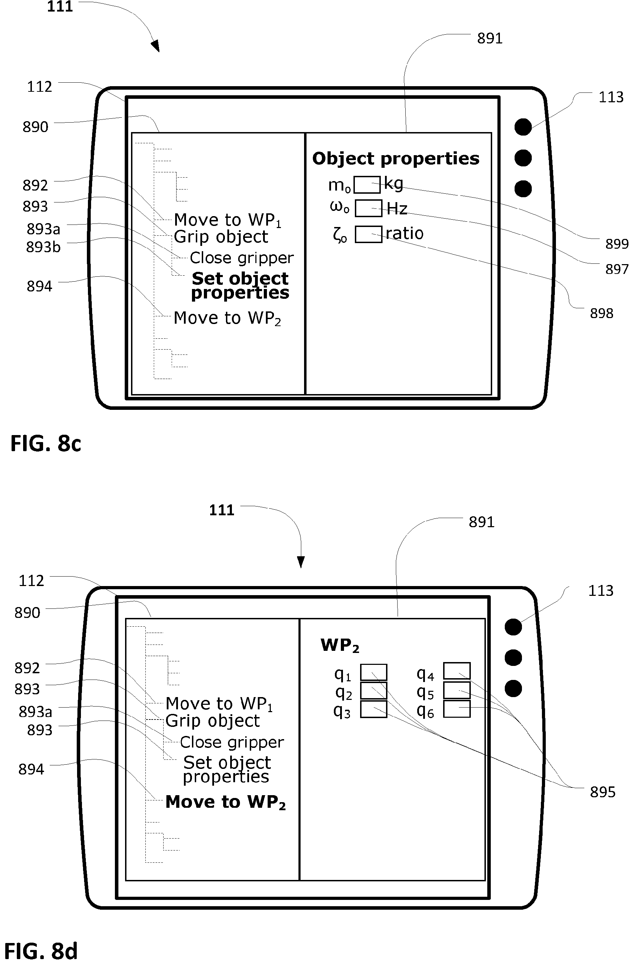

Step 781 is a step of changing the vibrational properties of the of at least one external object connected to the robot arm. This can for instance be achieved by adding or removing an external object connected to the robot arm, as this cause the vibrational properties of external object to change. In fig. 8b the program code "close gripper" 893a have been selected and the program code module 891 shows a slider 896 where a user can set the status of the gripper to either open or closed. In fig. 8b the status is set to close causing the gripper of the robot arm to close when program code "close gripper" is executed by the robot controller. Closing the gripper will usually change the vibrational properties of the gripper (the external object) as the mechanic of the gripper is changed, however in a typical use scenario the gripper is closed in order to pick up an object which corresponds to adding an additional external object. Slider 896 where a user can set the status of the gripper to either open or closed. The "Set object properties" program code selected in fig. 8c makes it possible for a user to provide the vibrational and other properties of the object which is picked up by the gripper. In fig. 8c the program code module show user field 897 where user can provide the eigenfrequency $\omega_O$ of the external object and a user field 898 where user can provide the damping ratio $\zeta_O$ of the external object. Additionally, the user can provide the mass mo of the external object in user field 899, as it is known that adding additional mass to a robot arm also influence the dynamic model of the robot arm.

Once the vibrational properties of the external object(s) have been changed in step 781 the steps of instructing a part of said robot arm to move to a target position is repeated with the difference the target position is changed to a second target position WPzas illustrated in brackets.

This can for instance be achieved by providing a program code instructing the robot arm to move the robot tool flange to a target position in the surroundings of the robot arm. In fig. 8d the "Move to WP$_2$" (illustrated in bold) have been selected and user can now in the corresponding program code module enter the joint angles $q_1$, $q_2$, $q_3$, $q_4$, $q_5$, $q_6$ of the robot joint at the target position in joint angle user fields 895.

Step 760 is repeated and generates second target motion M$_{d2}$ as illustrated in brackets for the robot arm, where the second target motion defines a motion of the robot arm causing the part of the robot arm to move to the second target position.

Step 770 is repeated and generates control signal(s) for the robot arm based on the second target motion and the in step 781 change vibrational properties of at least one external object connected to said robot arm. In other words, the vibrational properties of the object which is gripped by the gripper is considered when generating the control signals for the robot arm, resulting in the fact the the vibrations of the robot arm can be reduced in situations where the vibrational properties of the robot arm changes during execution of a robot program.

It is noted that the method illustrated in figs. 7 and 8 can be combined with the methods illustrated in figs. 4-7.

**Claims**

1. A robot controller (110) for controlling a robot arm (101), where said robot arm comprises a plurality of robot joints (102a, 102b, 102c, 102d, 102e, 102f) connecting a robot base (103) and a robot tool flange (104), where each of said robot joints comprises:

   • an output flange movable in relation to a robot joint body;
   • a joint motor configured to move said output flange in relation to said robot joint body;

   said robot controller is configured to:

   • obtaining vibrational properties of said robot arm;
   • provide a robot arm impulse train based on said vibrational properties of said robot arm, wherein said robot arm impulse train comprises a number of impulses;

   **characterized in that** said robot controller comprises an external object installation interface (232) configured to receive vibrational properties of at least one external object connected to said robot arm; wherein said robot controller is configured to

   • generate (470) a control signal for said robot arm based on a target motion for said arm and said received vibrational properties of said at least one external object, wherein said control signal comprises control parameters for said joint motor, wherein the control signal is generated by:

      ○ providing (471) at least one object impulse train based on said received vibrational properties of said at least one external object, wherein said object impulse train comprises a number of impulses, and
      ○ convolving (472, 575) said target motion with said robot arm impulse train and said at least one object impulse train.

2. The robot controller according to claim 1 wherein said external object installation interface is configured to receive said vibrational properties of at least one external object connected to said robot arm from at least one of:

   • a vibrational properties user signal (233) received from a user interface device;
   • a vibrational properties data signal (234) received from an external data source; and
   • a vibrational properties effector signal (236) received from said external object.

3. The robot controller according to any one of claims 1-2, wherein said vibrational properties is received in form of at least one number indicating the vibrational properties of said at least one external object.

4. The robot controller according to any one of claims 1-3, wherein said vibrational properties of said at least one external object are received in form of at least one external object vibration formula, where said external object vibration formula defines a relationship between said vibrational properties of said at least one external object and at least one robot parameter.

5. The robot controller according to any one of claims 1-4, wherein said vibrational properties of said at least one external object are provided as the eigenfrequencies and damping ratio of said at least one external object.

6. The robot controller according to any one of claims 1-5 wherein said robot controller is connected to a user interface device (111) comprising an external object installation module enabling a user to manually provide said vibrational properties of said at least one external object.

7. The robot controller according to claim 6 wherein said external object installation module comprises:

   • a first external object installation user interface, where a user can provide vibrational properties of a first external object connected to said robot arm;
   • a second external object installation user interface, where a user can provide vibrational properties of a second external object connected to said robot arm.

8. The robot controller according to any one of claims 6-7 wherein said external object installation module comprises:

   • an addition interface enabling a user to add an additional external object installation interface, where a user can provide vibrational properties of an additional external object connected to said robot arm.

9. A method of controlling a robot arm (101), where said robot arm comprises a plurality of robot joints (102a, 102b, 102c, 102d, 102e, 102f) connecting a robot base (103) and a robot tool flange (104), where each of said robot joints comprises:

   • an output flange movable in relation to a robot joint body;
   • a joint motor configured to move said output flange in relation to said robot joint body;

   said method comprises the steps of:

   • obtaining vibrational properties of said robot arm;
   • receiving (450), via an external object installation interface (232), vibrational properties of an external object connected to said robot arm;
   • generating (460) a target motion for said robot arm;
   • generating (470) a control signal for said robot arm based on said target motion, said vibrational properties of said robot arm, and said received vibrational properties of the external object, said control signal comprises control parameters for said joint motor, **characterised in** generating said control signal comprises

      • providing (471) an object impulse train based on said provided vibrational properties of said at least one external object and a robot arm impulse train based on said vibrational properties of said robot arm, said object impulse train and said robot arm impulse train each comprising a number of impulses; and
      • generating said control signal by convolving (472, 575) said target motion and said object impulse train and said robot arm impulse train.

10. The method according to claim 9 wherein said step of receiving said vibrational properties of at least one external object connected to said robot arm comprises at least one of the following steps:

- receiving a vibrational properties user signal from a user interface device, said vibrational properties user signal indicates said vibrational properties of at least one external object connected to said robot arm;
- receiving a vibrational properties data signal received from an external data source; said vibrational properties data signal indicates said vibrational properties of at least one external object connected to said robot arm; and
- receiving a vibrational properties effector signal received from said external object, said vibrational properties effector signal indicates said vibrational properties of at least one external object connected to said robot arm.

11. The method according to any one of claims 9-10, wherein said vibrational properties of said external object is received in form of at least one number indicating the vibrational properties of said at least one external object.

12. The method according to any one of claim 9-11, wherein said vibrational properties of said external object is received in form of at least one external object vibration formula, where said external object vibration formula defines at relationship between said vibrational properties of said at least one external object and at least one robot parameter.

13. The method according to any one of claims 9-12, wherein said vibrational properties of said at least one external object indicates the eigenfrequencies and damping ratio of said at least one external object.

14. The method according to any one of claims 9-13 comprising the steps of:

- receiving the vibrational properties of a first external object connected to said robot arm via a first external object installation interface of a user interface device;
- receiving the vibrational properties of a second external object connected to said robot arm via a second external object installation interface of a user interface device.

15. The method according to any one of claims 9-14 comprising the steps of:

- adding an additional external object installation interface using an addition interface of a user interface device;
- providing vibrational properties of an additional external object connected to said robot arm using said addition interface.

**Patentansprüche**

1. Robotersteuerung (110) zum Steuern eines Roboterarms (101), wobei der Roboterarm eine Vielzahl von Robotergelenken (102a, 102b, 102c, 102d, 102e, 102f) umfasst, die eine Roboterbasis (103) und einen Roboterwerkzeugflansch (104) verbinden, wobei jedes der Robotergelenke umfasst:

- einen Abtriebsflansch, der bezüglich eines Robotergelenkkörpers beweglich ist;
- einen Gelenkmotor, der dazu ausgelegt ist, den Abtriebsflansch bezüglich des Robotergelenkkörpers zu bewegen;
wobei die Robotersteuerung ausgelegt ist zum:

- Erhalten von Vibrationseigenschaften des Roboterarms;
- Bereitstellen eines Roboterarmimpulszugs basierend auf den Vibrationseigenschaften des Roboterarms, wobei der Roboterarmimpulszug eine Anzahl von Impulsen umfasst;

**dadurch gekennzeichnet, dass** die Robotersteuerung eine Installationsschnittstelle (232) für externe Objekte umfasst, die dazu ausgelegt ist, Vibrationseigenschaften von mindestens einem externen Objekt zu empfangen, das mit dem Roboterarm verbunden ist;
wobei die Robotersteuerung ausgelegt ist zum

- Erzeugen (470) eines Steuersignals für den Roboterarm basierend auf einer Zielbewegung für den Arm und den empfangenen Vibrationseigenschaften des mindestens einen externen Objekts, wobei das Steuersignal Steuerparameter für den Gelenkmotor umfasst, wobei das Steuersignal erzeugt wird durch:

  ◦ Bereitstellen (471) mindestens eines Objektimpulszugs basierend auf den empfangenen Vibrationseigenschaften des mindestens einen externen Objekts, wobei der Objektimpulszug eine Anzahl von Impulsen umfasst, und
∘ Falten (472, 575) der Zielbewegung mit dem Roboterarmimpulszug und dem mindestens einen Objektimpulszug.

2. Robotersteuerung nach Anspruch 1, wobei die Installationsschnittstelle für externe Objekte dazu ausgelegt ist, die Vibrationseigenschaften des mindestens einen externen Objekts, das mit dem Roboterarm verbunden ist, aus mindestens einem von Folgendem zu empfangen:

   • einem Vibrationseigenschaften-Benutzersignal (233), das von einer Benutzerschnittstellenvorrichtung empfangen wird;
   • einem Vibrationseigenschaften-Datensignal (234), das von einer externen Datenquelle empfangen wird; und
   • einem Vibrationseigenschaften-Effektorsignal (236), das von dem externen Objekt empfangen wird.

3. Robotersteuerung nach einem der Ansprüche 1-2, wobei die Vibrationseigenschaften in Form von mindestens einer Zahl empfangen werden, die die Vibrationseigenschaften des mindestens einen externen Objekts angibt.

4. Robotersteuerung nach einem der Ansprüche 1-3, wobei die Vibrationseigenschaften des mindestens einen externen Objekts in Form mindestens einer Formel für die Vibration externer Objekte empfangen werden, wobei die Formel für die Vibration externer Objekte eine Beziehung zwischen den Vibrationseigenschaften des mindestens einen externen Objekts und mindestens einem Roboterparameter definiert.

5. Robotersteuerung nach einem der Ansprüche 1-4, wobei die Vibrationseigenschaften des mindestens einen externen Objekts als die Eigenfrequenzen und das Dämpfungsverhältnis des mindestens einen externen Objekts bereitgestellt werden.

6. Robotersteuerung nach einem der Ansprüche 1-5, wobei die Robotersteuerung mit einer Benutzerschnittstellenvorrichtung (111) verbunden ist, die ein Installationsmodul für externe Objekte umfasst, das einem Benutzer ermöglicht, die Vibrationseigenschaften des mindestens einen externen Objekts manuell bereitzustellen.

7. Robotersteuerung nach Anspruch 6, wobei das Installationsmodul für externe Objekte umfasst:

   • eine erste Benutzerschnittstelle zur Installation externer Objekte, bei der ein Benutzer Vibrationseigenschaften eines ersten externen Objekts bereitstellen kann, das mit dem Roboterarm verbunden ist;
   • eine zweite Benutzerschnittstelle zur Installation externer Objekte, bei der ein Benutzer Vibrationseigenschaften eines zweiten externen Objekts bereitstellen kann, das mit dem Roboterarm verbunden ist.

8. Robotersteuerung nach einem der Ansprüche 6-7, wobei das Installationsmodul für externe Objekte umfasst:

   • eine Hinzufügungsschnittstelle, die einem Benutzer ermöglicht, eine zusätzliche Installationsschnittstelle für externe Objekte hinzuzufügen, bei der ein Benutzer Vibrationseigenschaften eines zusätzlichen externen Objekts bereitstellen kann, das mit dem Roboterarm verbunden ist.

9. Verfahren zum Steuern eines Roboterarms (101), wobei der Roboterarm eine Vielzahl von Robotergelenken (102a, 102b, 102c, 102d, 102e, 102f) umfasst, die eine Roboterbasis (103) und einen Roboterwerkzeugflansch (104) verbinden, wobei jedes der Robotergelenke umfasst:

   • einen Abtriebsflansch, der bezüglich eines Robotergelenkkörpers beweglich ist;
   • einen Gelenkmotor, der dazu ausgelegt ist, den Abtriebsflansch bezüglich des Robotergelenkkörpers zu bewegen;

   wobei das Verfahren die folgenden Schritte umfasst:

   • Erhalten von Vibrationseigenschaften des Roboterarms;
   • Empfangen (450), über eine Installationsschnittstelle (232) für externe Objekte, von Vibrationseigenschaften eines externen Objekts, das mit dem Roboterarm verbunden ist;
   • Erzeugen (460) einer Zielbewegung für den Roboterarm;
   • Erzeugen (470) eines Steuersignals für den Roboterarm basierend auf der Zielbewegung, den Vibrationseigenschaften des Roboterarms und den empfangenen Vibrationseigenschaften des externen Objekts, wobei das Steuersignal Steuerparameter für den Gelenkmotor umfasst, **dadurch gekennzeichnet, dass** das Erzeugen des Steuersignals umfasst:

- Bereitstellen (471) eines Objektimpulszugs basierend auf den bereitgestellten Vibrationseigenschaften des mindestens einen externen Objekts und eines Roboterarmimpulszugs basierend auf den Vibrationseigenschaften des Roboterarms, wobei der Objektimpulszug und der Roboterarmimpulszug jeweils eine Anzahl von Impulsen umfassen; und
- Erzeugen des Steuersignals durch Falten (472, 575) der Zielbewegung und des Objektimpulszugs und des Roboterarmimpulszugs.

10. Verfahren nach Anspruch 9, wobei der Schritt des Empfangens der Vibrationseigenschaften mindestens eines externen Objekts, das mit dem Roboterarm verbunden ist, mindestens einen der folgenden Schritte umfasst:

- Empfangen eines Vibrationseigenschaften-Benutzersignals von einer Benutzerschnittstellenvorrichtung, wobei das Vibrationseigenschaften-Benutzersignal die Vibrationseigenschaften mindestens eines externen Objekts angibt, das mit dem Roboterarm verbunden ist;
- Empfangen eines Vibrationseigenschaften-Datensignals, das von einer externen Datenquelle empfangen wird; wobei das Vibrationseigenschaften-Datensignal die Vibrationseigenschaften mindestens eines externen Objekts angibt, das mit dem Roboterarm verbunden ist; und
- Empfangen eines Vibrationseigenschaften-Effektorsignals, das von dem externen Objekt empfangen wird, wobei das Vibrationseigenschaften-Effektorsignal die Vibrationseigenschaften mindestens eines externen Objekts angibt, das mit dem Roboterarm verbunden ist.

11. Verfahren nach einem der Ansprüche 9-10, wobei die Vibrationseigenschaften des externen Objekts in Form von mindestens einer Zahl empfangen werden, die die Vibrationseigenschaften des mindestens einen externen Objekts angibt.

12. Verfahren nach einem der Ansprüche 9-11, wobei die Vibrationseigenschaften des externen Objekts in Form mindestens einer Formel für die Vibration externer Objekte empfangen werden, wobei die Formel für die Vibration externer Objekte eine Beziehung zwischen den Vibrationseigenschaften des mindestens einen externen Objekts und mindestens einem Roboterparameter definiert.

13. Verfahren nach einem der Ansprüche 9-12, wobei die Vibrationseigenschaften des mindestens einen externen Objekts die Eigenfrequenzen und das Dämpfungsverhältnis des mindestens einen externen Objekts angeben.

14. Verfahren nach einem der Ansprüche 9-13, das die folgenden Schritte umfasst:

- Empfangen der Vibrationseigenschaften eines ersten externen Objekts, das mit dem Roboterarm verbunden ist, über eine erste Installationsschnittstelle für externe Objekte einer Benutzerschnittstellenvorrichtung;
- Empfangen der Vibrationseigenschaften eines zweiten externen Objekts, das mit dem Roboterarm verbunden ist, über eine zweite Installationsschnittstelle für externe Objekte einer Benutzerschnittstellenvorrichtung.

15. Verfahren nach einem der Ansprüche 9-14, das die folgenden Schritte umfasst:

- Hinzufügen einer zusätzlichen Installationsschnittstelle für externe Objekte unter Verwendung einer Hinzufügungsschnittstelle einer Benutzerschnittstellenvorrichtung;
- Bereitstellen von Vibrationseigenschaften eines zusätzlichen externen Objekts, das mit dem Roboterarm verbunden ist, unter Verwendung der Hinzufügungsschnittstelle.

**Revendications**

1. Contrôleur (110) de robot destiné à commander un bras (101) de robot, ledit bras de robot comprenant une pluralité d'articulations (102a, 102b, 102c, 102d, 102e, 102f) de robot raccordant une base (103) de robot et une bride (104) d'outil de robot, chacune desdites articulations de robot comprenant :

- une bride de sortie mobile par rapport à un corps d'articulation de robot ;

• un moteur d'articulation configuré pour animer d'un mouvement ladite bride de sortie par rapport audit corps d'articulation de robot ;

ledit contrôleur de robot étant configuré pour :

• obtenir des caractéristiques vibratoires dudit bras de robot ;
• fournir un train d'impulsions de bras de robot sur la base desdites caractéristiques vibratoires dudit bras de robot, ledit train d'impulsions de bras de robot comprenant un certain nombre d'impulsions ;

ledit contrôleur de robot étant **caractérisé en ce qu'**il comprend une interface d'installation d'objet externe (232) configurée pour recevoir des caractéristiques vibratoires d'au moins un objet externe raccordé audit bras de robot ;

ledit contrôleur de robot étant configuré pour

• générer (470) un signal de commande pour ledit bras de robot sur la base d'un mouvement cible pour ledit bras et desdites caractéristiques vibratoires reçues dudit au moins un objet externe, ledit signal de commande comprenant des paramètres de commande pour ledit moteur d'articulation, le signal de commande étant généré par :

◦ fourniture (471) d'au moins un train d'impulsions d'objet sur la base desdites caractéristiques vibratoires reçues dudit au moins un objet externe, ledit train d'impulsions d'objet comprenant un certain nombre d'impulsions, et
◦ convolution (472, 575) dudit mouvement cible avec ledit train d'impulsions de bras de robot et ledit train d'impulsions d'objet.

2. Contrôleur de robot selon la revendication 1, ladite interface d'installation d'objet externe étant configurée pour recevoir lesdites caractéristiques vibratoires d'au moins un objet externe raccordé audit bras de robot à partir d'au moins un des signaux suivants :

• un signal utilisateur de caractéristiques vibratoires (233) reçu depuis un dispositif d'interface utilisateur ;
• un signal de données de caractéristiques vibratoires (234) reçu depuis une source externe de données ; et
• un signal d'effecteur de caractéristiques vibratoires (236) reçu depuis ledit objet externe.

3. Contrôleur de robot selon l'une quelconque des revendications 1 à 2, lesdites caractéristiques vibratoires étant reçues sous la forme d'au moins un nombre indiquant les caractéristiques vibratoires dudit au moins un objet externe.

4. Contrôleur de robot selon l'une quelconque des revendications 1 à 3, lesdites caractéristiques vibratoires dudit au moins un objet externe étant reçues sous la forme d'au moins une formule de vibration d'objet externe, ladite formule de vibration d'objet externe définissant une relation entre lesdites caractéristiques vibratoires dudit au moins un objet externe et au moins un paramètre de robot.

5. Contrôleur de robot selon l'une quelconque des revendications 1 à 4, lesdites caractéristiques vibratoires dudit au moins un objet externe étant fournies sous la forme des fréquences propres et du rapport d'amortissement dudit au moins un objet externe.

6. Contrôleur de robot selon l'une quelconque des revendications 1 à 5, ledit contrôleur de robot étant raccordé à un dispositif d'interface utilisateur (111) comprenant un module d'installation d'objet externe permettant à un utilisateur de fournir manuellement lesdites caractéristiques vibratoires dudit au moins un objet externe.

7. Contrôleur de robot selon la revendication 6, ledit module d'installation d'objet externe comprenant :

• une première interface utilisateur d'installation d'objet externe, via laquelle un utilisateur peut fournir des caractéristiques vibratoires d'un premier objet externe raccordé audit bras de robot ;
• une deuxième interface utilisateur d'installation d'objet externe, via laquelle un utilisateur peut fournir des caractéristiques vibratoires d'un deuxième objet externe raccordé audit bras de robot.

8. Contrôleur de robot selon l'une quelconque des revendications 6 à 7, ledit module d'installation d'objet externe comprenant :

• une interface d'ajout permettant à un utilisateur d'ajouter une interface d'installation d'objet externe additionnelle, via laquelle un utilisateur peut fournir des caractéristiques vibratoires d'un objet externe additionnel raccordé audit bras de robot.

**9.** Procédé de commande d'un bras (101) de robot, ledit bras de robot comprenant une pluralité d'articulations (102a, 102b, 102c, 102d, 102e, 102f) de robot raccordant une base (103) de robot et une bride (104) d'outil de robot, chacune des articulations de robot comprenant :

• une bride de sortie mobile par rapport à un corps d'articulation de robot ;
• un moteur d'articulation configuré pour animer d'un mouvement ladite bride de sortie par rapport audit corps d'articulation de robot ;

ledit procédé comprenant les étapes suivantes :

• l'obtention de caractéristiques vibratoires dudit bras de robot ;
• la réception (450), via une interface d'installation d'objet externe (232), de caractéristiques vibratoires d'un objet externe raccordé audit bras de robot ;
• la génération (460) d'un mouvement cible pour ledit bras de robot ;
• la génération (470) d'un signal de commande pour ledit bras de robot sur la base dudit mouvement cible, desdites caractéristiques vibratoires dudit bras de robot, et desdites caractéristiques vibratoires reçues de l'objet externe, ledit signal de commande comprenant des paramètres de commande pour ledit moteur d'articulation, **caractérisé en ce que** la génération dudit signal de commande comprend :

• la fourniture (471) d'un train d'impulsions d'objet sur la base desdites caractéristiques vibratoires fournies dudit au moins un objet externe et d'un train d'impulsions de bras de robot sur la base desdites caractéristiques vibratoires dudit bras de robot, ledit train d'impulsions d'objet et ledit train d'impulsions de bras de robot comprenant chacun un certain nombre d'impulsions ; et
• la génération dudit signal de commande par convolution (472, 575) dudit mouvement cible avec ledit train d'impulsions d'objet et ledit train d'impulsions de bras de robot.

**10.** Procédé selon la revendication 9, ladite étape de réception desdites caractéristiques vibratoires d'au moins un objet externe raccordé audit bras de robot comprenant au moins une des étapes suivantes :

• la réception d'un signal utilisateur de caractéristiques vibratoires depuis un dispositif d'interface utilisateur, ledit signal utilisateur de caractéristiques vibratoires indiquant lesdites caractéristiques vibratoires d'au moins un objet externe raccordé audit bras de robot ;
• la réception d'un signal de données de caractéristiques vibratoires reçu depuis une source externe de données, ledit signal de données de caractéristiques vibratoires indiquant lesdites caractéristiques vibratoires d'au moins un objet externe raccordé audit bras de robot ; et
• la réception d'un signal d'effecteur de caractéristiques vibratoires reçu depuis ledit objet externe, ledit signal d'effecteur de caractéristiques vibratoires indiquant lesdites caractéristiques vibratoires d'au moins un objet externe raccordé audit bras de robot.

**11.** Procédé selon l'une quelconque des revendications 9 à 10, lesdites caractéristiques vibratoires dudit objet externe étant reçues sous la forme d'au moins un nombre indiquant les caractéristiques vibratoires dudit au moins un objet externe.

**12.** Procédé selon l'une quelconque des revendications 9 à 11, lesdites caractéristiques vibratoires dudit objet externe étant reçues sous la forme d'au moins une formule de vibration d'objet externe, ladite formule de vibration d'objet externe définissant une relation entre lesdites caractéristiques vibratoires dudit au moins un objet externe et au moins un paramètre de robot.

**13.** Procédé selon l'une quelconque des revendications 9 à 12, lesdites caractéristiques vibratoires dudit au moins un objet externe indiquant les fréquences propres et le rapport d'amortissement dudit au moins un objet externe.

**14.** Procédé selon l'une quelconque des revendications 9 à 13, comprenant les étapes suivantes :

• la réception des caractéristiques vibratoires d'un premier objet externe raccordé audit bras de robot via une première interface d'installation d'objet externe d'un dispositif d'interface utilisateur ;
• la réception des caractéristiques vibratoires d'un deuxième objet externe raccordé audit bras de robot via une deuxième interface d'installation d'objet externe d'un dispositif d'interface utilisateur.

15. Procédé selon l'une quelconque des revendications 9 à 14, comprenant les étapes suivantes :

• l'ajout d'une interface d'installation d'objet externe additionnelle au moyen d'une interface d'ajout d'un dispositif d'interface utilisateur ;
• la fourniture de caractéristiques vibratoires d'un objet externe additionnel raccordé audit bras de robot au moyen de ladite interface d'ajout.

**FIG. 1**

**FIG. 2**

**FIG. 3a**

**FIG. 3b**

**111**

**340**

**112**
**337c**

**Add object**

# External object 1

**338ω**

$\omega_i$ | $N_\omega$ | Hz

**338ζ**

$\zeta_i$ | $N_\zeta$ | ratio

**113**

## Fig. 3c

**111**

**340**

**112**
**337c**

**Add object**

# External object 1

**338ω**

$\omega_1$ | $N_\omega$ | Hz

**338ζ**

$\zeta_1$ | $N_\zeta$ | ratio

# External object 2

**339ω**

$\omega_2$ | $\omega_2\,(p_1, p_2)$

**339ζ**

$\zeta_2$ | $\zeta_2\,(p_1, p_2)$

**113**

## FIG. 3d

| 450 | Receiving the vibrational properties of external object | $\vec{\omega}_i$ $\vec{\zeta}_i$ |

| 460 | Generate target motion | $WP_1$ $KoR$ |

$\rightarrow M_d$

470  Generate control signal for robot arm

| 471 | Generate impuls train | $\omega_i$ $\zeta_i$ |

$\rightarrow \vec{A}_O, \vec{\Delta}_O$

| 472 | convolve target motion and impulse train | $M_d$ |

$\rightarrow M_d^*$

| 473 | Generate control singals based on convolved target motion | |

$T_{motor, a}$
$T_{motor, b}$
$T_{motor, c}$
$T_{motor, d}$
$T_{motor, e}$
$T_{motor, f}$

# Fig. 4

| 450 | Receiving the vibrational properties of external object | $\leftarrow$ | $\begin{cases} \omega_i \\ \zeta_i \end{cases}$ |

| 460 | Generate target motion | $\leftarrow$ $\begin{cases} WP_1 \\ KoR \end{cases}$ $\rightarrow M_d$ |

470   Generate control signal for robot arm

| 471 | Generate object impuls train | $\leftarrow$ $\begin{cases} \omega_i \\ \zeta_i \end{cases}$ $\rightarrow \vec{A}_O, \vec{\Delta}_O$ |

| 472 | convolve target motion and impulse train | $\leftarrow M_d$ $\rightarrow M_d^*$ |

| 574 | Generate robot arm impuls train | $\leftarrow$ $\begin{cases} \omega_{ra} \\ \zeta_{ra} \end{cases}$ $\rightarrow \vec{A}_{ra}, \vec{\Delta}_{ra}$ |

| 575 | convolve convolved motion and impulse train | $\leftarrow M_d^*$ $\rightarrow M_d^{**}$ |

| 473 | Generate control singals based on convolved target motion |

$\begin{cases} T_{motor,\,a} \\ T_{motor,\,b} \\ T_{motor,\,c} \\ T_{motor,\,d} \\ T_{motor,\,e} \\ T_{motor,\,f} \end{cases}$

## Fig. 5

450    Receiving the vibrational properties of external object

651    Recive first vibrational properties    $\leftarrow$   $\omega_1$   $\zeta_1$

652    Recive second vibrational properties    $\leftarrow$   $\omega_2$   $\zeta_2$

460    Generate target motion    $\leftarrow$   $WP_1$   $KoR$

$\rightarrow M_d$

470    Generate control signal for robot arm

471    Generate first impuls train    $\leftarrow$   $\omega_1$   $\zeta_1$

$\rightarrow \vec{A}_{O1}, \vec{\Delta}_{O1}$

472    convolve target motion and first impulse train    $\leftarrow M_d$

$\rightarrow M_d^*$

676    Generate second impuls train    $\leftarrow$   $\omega_2$   $\zeta_2$

$\rightarrow \vec{A}_{O2}, \vec{\Delta}_{O2}$

677    convolve convolved motion and Second impulse train    $\leftarrow M_d^*$

$\rightarrow M_d^{**}$

473    Generate control singals based on convolved target motion

$\rightarrow$ $T_{motor,\, a}$   $T_{motor,\, b}$   $T_{motor,\, c}$   $T_{motor,\, d}$   $T_{motor,\, e}$   $T_{motor,\, f}$

**Fig. 6**

| 780 | Instructing robot arm to move to target position | $\rightarrow WP_1(WP_2)$ |

$$\left[ \begin{array}{l} WP_1(WP_2) \\ KoR \end{array} \right.$$

| 760 | Generate target motion |

$\rightarrow M_{d1}\ (M_{d2})$

**770 Generate control signal for robot arm**

| 451 | Generate impuls train |

$$\left[ \begin{array}{l} \omega_{i,1}\left(\omega_{i,2}\right) \\ \zeta_{i,1}\ \ (\zeta_{i,2}) \end{array} \right.$$

$\vec{A}_{O,1};\ \vec{\Delta}_{O,1}$
$(\vec{A}_{O,2};\ \vec{\Delta}_{O,2})$

| 452 | convolve target motion and impulse train |

$\leftarrow M_{d1}(M_{d2})$

| 453 | Generate control singals based on convolved target motion |

$\rightarrow M_{d1}^{*}\ (M_{d2}^{*})$

$$\left\{ \begin{array}{l} T_{motor,\ a} \\ T_{motor,\ b} \\ T_{motor,\ c} \\ T_{motor,\ d} \\ T_{motor,\ e} \\ T_{motor,\ f} \end{array} \right.$$

| 781 | Change vibrational propeerties of said external component |

$\omega_{i,1} \rightarrow \omega_{i,2}$

$\zeta_{i,1} \rightarrow \zeta_{i,2}$

# Fig. 7

111

891

112

890

891

892

893

893a

893b

894

**Move to WP$_1$**
Grip object
Close gripper
Set object
properties
Move to WP$_2$

113

**WP$_1$**

q$_1$  ☐   q$_4$  ☐
q$_2$  ☐   q$_5$  ☐
q$_3$  ☐   q$_6$  ☐

895

**FIG. 8a**

111

891

112

890

892

893

893a

893b

894

Move to WP$_1$
Grip object
**Close gripper**
Set object
properties
Move to WP$_2$

113

Gripper status

open ☐▨ close

896

**FIG. 8b**

**FIG. 8c**

**FIG. 8d**

## REFERENCES CITED IN THE DESCRIPTION

**Patent documents cited in the description**

- WO 2019012040 A1
- EP 1132790 A1
- EP 1920892 A2
- WO 2014110682 A1
- US 4763531 A
- US 2015204742 A

**Non-patent literature cited in the description**

- **P.H. CHANG ; H.-S. PARK.** Time-varying input shaping technique applied to vibration reduction of an industrial robot. *Control Engineering Practice,* 2005, vol. 13 (1), 121-130, http://dx.doi.org/10.1016/j.conengprac.2004.02.009
- **D. K. THOMSEN ; R. SØE-KNUDSEN ; D. BRANDT ; X. ZHANG.** Experimental implementation of time-varying input shaping on ur robots. *Proceedings of the 16th International Conference on Informatics in Control, Automation and Robotics (ICINCO 2019),* 2019, vol. 1, 488-498, http://dx.doi.org/10.5220/0007834504880498
- **D. K. THOMSEN ; R. SØE-KNUDSEN ; D. BRANDT ; O. BALLING ; X. ZHANG.** Smooth online time-varying input shaping with fractional delay {FIR} filtering. *Control Engineering Practice,* 2019, vol. 88, 21-37, http://dx.doi.org/10.1016/j.conengprac.2019.04.003